# EUROPEAN PATENT APPLICATION

(11) **EP 3 579 521 A1**
(43) Date of publication of application: **11.12.2019**
(21) Application number: 19165731.1
(22) Date of filing: 28.03.2019
(51) Int. Cl.: H04L 29/06, H04L 12/707, H04L 12/851

(54) **SELECTIVE DUPLICATION OF DATA IN HYBRID ACCESS NETWORKS**

(30) Priority: 06.06.2018 US 201816001522
(71) Applicant: Nokia Technologies Oy, 02610 Espoo (FI)
(72) Inventor: Kolding, Troels Emil, DK-9270 Klarup (DK); Frederikson, Frank, DK-9270 Klarup (DK); Lauridsen, Mads, DK-9260 Gistrup (DK); Madsen, Tatiana, DK-9220 Aalborg (DK); Markmøller, Christian, DK-9220 Aalborg (DK); Pocovi, Guillermo, DK-9000 Aalborg (DK); Mogensen, Rasmus Suhr, DK-9000 Aalborg (DK)
(74) Representative: Bryers LLP

(57) **Abstract**

A packetization module receives messages in a plurality of streams. The packetization module also accesses requirements corresponding to the plurality of streams and information indicating capacities of a plurality of paths between a first endpoint and a second endpoint. The messages are redundantly transmitted from a subset of the plurality of streams over the plurality of paths. The subset is selected based on the requirements and the capacities. In some cases, a timer is initiated in response to the packetization module receiving one of the first messages. The packets are then transmitted in response to expiration of the timer or in response to the packets reaching the capacities of the plurality of paths. In some cases, the messages are stored in buffers that define congestion windows for the streams. A congestion controller modifies the sizes of the congestion windows based on acknowledgment feedback.

## Description

### BACKGROUND

Hybrid access techniques are used to combine multiple interfaces into a single connection between a network and user equipment such as smart phones, tablets, laptops, drones, autonomous vehicles, Internet protocol televisions (IPTV), Internet of Things (IoT) devices such as shipping containers, and the like. Depending on the context, the interfaces are operated by different service providers, at different network layers such as macrocells and small cells, or according to different access technologies. Hybrid access techniques are applied to wireless access technologies, wireline access technologies, or combinations thereof. Examples of wireless access technologies include standards defined by the Third Generation Partnership Project (3GPP) such as Long Term Evolution (LTE) or New Radio (NR) to support communication in licensed or unlicensed frequency bands, 802.11 standards defined by the IEEE to support communication in unlicensed frequency bands such as Wi-Fi in a wireless local area network (WLAN), high speed packet access (HSPA), Global System for Mobile communications (GSM), satellite links, or using other access technologies such as millimeter wave technologies. Examples of wireline access technologies include digital subscriber line (DSL) connectivity, cable modems that implement data over cable service interface specification (DOCSIS), and the like. Other types of communication devices such as devices that support machine-to-machine or vehicle-to-vehicle communication are also able to support multiple access technologies that can be used to maintain concurrent wireless connections. Examples of hybrid access techniques include multipath transmission control protocol (MPTCP), which aggregates multiple TCP sessions between the same endpoints, and multipath quick user datagram protocol (UDP) Internet connection (MPQUIC), which aggregates multiple paths for transmitting packets between the same hosts.

### BRIEF DESCRIPTION OF THE DRAWINGS

The present disclosure may be better understood, and its numerous features and advantages made apparent to those skilled in the art by referencing, by way of example only, the accompanying drawings. The use of the same reference symbols in different drawings indicates similar or identical items.
FIG. 1 illustrates a communication system according to some embodiments.
FIG. 2 is a diagram of a communication system that supports hybrid access over a plurality of communication links according to some embodiments.
FIG. 3 is a block diagram of a packet scheduler that is configured to generate packets including redundant messages according to some embodiments.
FIG. 4 is a block diagram of messages in a plurality of streams according to some embodiments.
FIG. 5 is a block diagram of packets that are generated by the packetization module for transmission over carriers corresponding to multiple paths through a network according to some embodiments.
FIG. 6 is a block diagram of messages in a plurality of streams according to some embodiments.
FIG. 7 is a block diagram of packets that are generated by the packetization module for transmission over carriers corresponding to multiple paths through a network according to some embodiments.
FIG. 8 is a block diagram of a packet scheduler that performs congestion control according to some embodiments.

### DETAILED DESCRIPTION

Implementing hybrid access techniques such as multipath transmission control protocol (MPTCP) or multipath quick user datagram protocol (UDP) Internet connection (MPQUIC) allows the resources of the different paths to be pooled to transport data for a single connection or to allow a host to automatically select the path with the highest quality. Hybrid access techniques also improve resilience of the communication system to connectivity failures. For example, different service providers, network layers, and access technologies do not provide uniform coverage in all geographic areas. An autonomous vehicle that does not implement multipath communication is therefore likely to traverse regions with poor or nonexistent coverage from its current service provider, network layer, or access technology. Consequently, the autonomous vehicle may suffer from increased latency, handover delays, packet losses, or radio link failures as the autonomous vehicle passes through areas that are not covered by its current service provider, network layer, or access technology. Incorporating multipath communication reduces latency, handover delays, packet losses, and radio link failures by allowing the autonomous vehicle to access the network via one or more high-quality connections at any location.

On average, hybrid access techniques provide significant improvements in latency and reliability. However, conventional hybrid access techniques such as MPTCP and MPQUIC do not differentiate between traffic classes that have different latency or reliability requirements. For example, a drone can generate a video stream that is transmitted to the network concurrently with the drone receiving time-critical commands that are used to maneuver the drone. The non-time-critical video stream has different latency and reliability requirements than the time-critical commands in the control stream. Conventional MPTCP schedulers provide high reliability connections for time-critical commands by duplicating all the transmitted data, which requires twice the bandwidth for a fixed available capacity. The duplication is performed without regard to whether a message is critical or non-critical, which leads to unnecessary duplication of non-critical data and a corresponding waste of resources and increased latency for both the critical and non-critical data. Thus, the improvement in reliability comes with a large performance penalty. Furthermore, conventional multipath techniques schedule the non-time-critical packets of the video stream with the same priority as the time-critical packets in the control stream. For example, an MPTCP scheduler schedules both the non-time-critical and the time-critical packets from the same first-in-first-out (FIFO) buffer. Since both time-critical and time-non-critical messages receive the same treatment, configuring the scheduler to reliably deliver the time-critical messages slows down the transfer speed of the non-time-critical messages, which reduces the overall resource utilization. Configuring the scheduler for increased throughput and resource utilization results in lower reliability for the time-critical messages. Furthermore, hybrid access schedulers do not ensure that time-critical packets will be transmitted in time to arrive at their destination before they are needed. For example, transmission of a time-critical packet in an MPTCP system will be delayed if a large number of non-time-critical packets are already present in the scheduler's FIFO buffer.

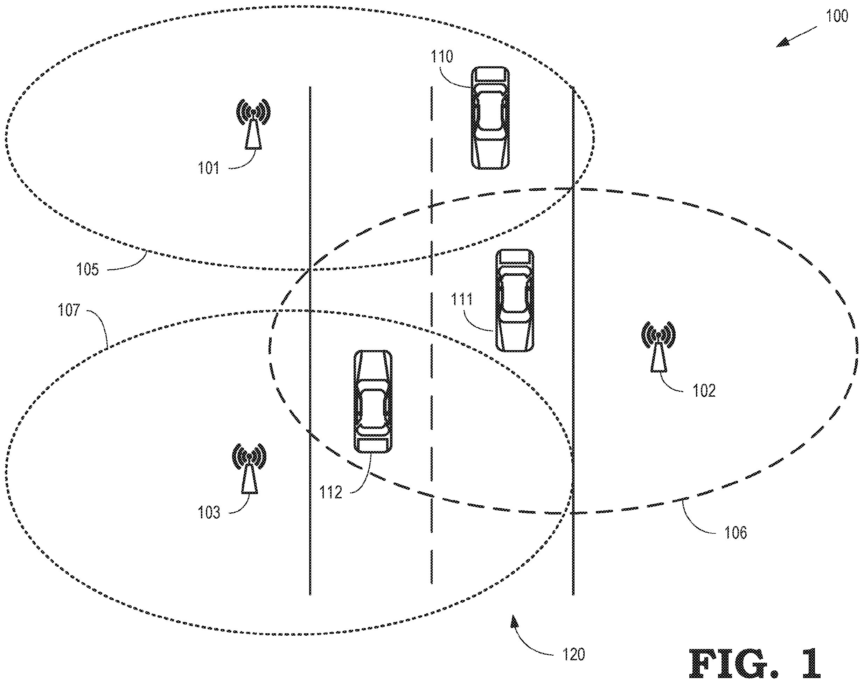

FIGs. 1-8 disclose embodiments of techniques that improve the reliability and latency of multipath transmission by selecting messages for redundant transmission from a first endpoint over a plurality of paths to a second endpoint (or multiple second endpoints) based on requirements for transmitting or receiving the messages and based on capacities of the plurality of paths. Examples of the requirements include reliability or robustness, priorities, service delay constraints, and the like. In some embodiments, a packetization module receives a plurality of streams and a corresponding plurality of requirements. Messages in one of the streams are transmitted redundantly by duplicating the messages in packets that are scheduled for transmission over different paths. For example, messages in a time-critical stream are duplicated in at least two packets that are transmitted over at least two different paths that are selected from a set of paths available for transmission of messages. Once the time-critical messages have been added to the packets, any remaining capacity in the selected paths is populated with one or more messages from the non-time-critical streams. In some embodiments, a total size of a congestion window is partitioned into separate portions for subsets of the streams to prevent high-rate streams from exhausting the congestion window to the detriment of low-rate streams.

In some embodiments, the packetization module initiates a timer in response to receiving data on one of the streams, which is referred to herein as a "critical stream." A duration of the timer can be determined based on a packet latency requirement and a transmission time between the first and second endpoints. The packetization module continues to populate available capacity remaining in the packets until the timer expires, which triggers transmission of the packets. In some embodiments, the amount of redundancy (or number of duplications) is determined based on a required reliability or robustness associated with the stream including the message. For example, three copies of a message from a critical stream can be added to packets for transmission on three paths regardless of the amount of data available for transmission from one or more non-critical streams. In some embodiments, the amount of redundancy is determined in part by the amount of data in the non-critical streams to improve bandwidth efficiency. For example, the amount of redundancy is determined to minimize a number of paths that are used to transmit the redundant critical messages and the non-critical messages that arrive within the timer duration while still fulfilling the reliability requirement. The number of paths that are allocated for transmission of the redundant critical messages and the non-critical messages is also reduced to improve bandwidth efficiency.

FIG. 1 illustrates a communication system 100 according to some embodiments. The wireless communication system 100 includes base stations 101, 102, 103, which are collectively referred to herein as "the base stations 101-103." As used herein, the term "base station" refers to devices capable of providing wireless connectivity including base station routers, macrocells, small cells, metrocells, microcells, picocells, femtocells, access points, and the like. The base stations 101-103 provide wireless connectivity within corresponding coverage areas or cells 105, 106, 107, which are collectively referred to herein as "the cells 105-107." In the illustrated embodiment, the base stations 101-103 are providing wireless connectivity to vehicles 110, 111, 112 (collectively referred to herein as "the vehicles 110-112") that are located within one or more of the cells 105-107. Some embodiments of the vehicles 110-112 also support vehicle-to-vehicle communication that does not necessarily require communication with the base stations 101-103.

The base stations 101-103 provide wireless connectivity over interfaces that are operated by different service providers, at different network layers, or according to different access technologies. For example, the base stations 101, 103 can be owned or operated by a first service provider and the base station 102 can be owned or operated by a second service provider. For another example, the base stations 101, 103 can be macrocells and the base station 102 could be a small cell. For yet another example, the base stations 101, 103 can provide wireless connectivity according to a first wireless access technology and the base station 102 can provide wireless connectivity according to a second wireless access technology. Examples of wireless access technologies include standards defined by the Third Generation Partnership Project (3GPP) such as Long Term Evolution (LTE) to support communication in licensed or unlicensed frequency bands, 802.11 standards defined by the IEEE to support communication in unlicensed frequency bands such as Wi-Fi in a wireless local area network (WLAN), high speed packet access (HSPA), Global System for Mobile communications (GSM), satellite links, or using other access technologies such as millimeter wave technologies.

In some embodiments, wireline access technologies are used to communicate with one or more of the vehicles 110-112. For example, a fixed network can be embedded in a road 120 and used to provide wireline access for one or more of the vehicles 110-112. Examples of wireline access technologies include digital subscriber line (DSL) connectivity, cable modems that implement data over cable service interface specification (DOCSIS), and the like.

The heterogeneous wireless communication system 100 shown in FIG. 1 does not always provide low latency, high reliability communication that is necessary to support mission critical applications. For example, if the vehicles 110-112 are autonomous vehicles, messages such as application layer control messages must be received within a time deadline at a very low error rate, which is <0.001% in some cases. The autonomous vehicles 110-112 also transmit or receive messages that are not subject to stringent latency or reliability requirements. For example, a video feed can tolerate a higher error rate and is subject to less stringent latency requirements than control messages used to maneuver the vehicles 110-112 to avoid collisions. Other examples of messages that are not subject to stringent latency or reliability requirements include map updates, sensor data, traffic data, and the like.

In the illustrated embodiment, the vehicle 110 has a subscription with a service provider that owns or operates the base station 101 and the vehicle 110 is configured to communicate with the base station 101 according to the appropriate access technology. As long as the vehicle 110 remains within the cell 105, the vehicle 110 receives high-quality communication over the air interface. However, if the vehicle 110 were to leave the cell 105 and travel into the cell 106, communication with the network could be interrupted depending on whether the vehicle 110 has a subscription with the service provider that owns or operates the base station 102 and is configured to communicate with the base station 102 according to the appropriate access technology. For example, the vehicle 111 does not have a subscription with the service provider that owns or operates the base station 102. The vehicle 111 is therefore likely to experience a high rate of packet loss or even a radio link failure that will cause a service break having a longer duration, which can cause one or more messages to arrive after a deadline.

The vehicle 112 has subscriptions with the service providers that own or operate the base stations 102, 103. The vehicle 112 is therefore able to handover between the base stations 102, 103 as it moves from the cell 107 to the cell 106. A typical handover delay between the networks that include the base stations 102, 103 is around 50 milliseconds (ms) and the vehicle 112 may not have a connection to the network during this time interval. Some applications cannot tolerate an outage of this duration because the outages cause the message reception deadlines to be exceeded. The reliability of the application will therefore decrease as a result of the handover.

At least in part to improve reliability of the communication system 100 for mission critical messages, hybrid access is implemented to allow multiple interfaces to be combined or aggregated into a single connection. For example, interfaces to the base stations 101-103 can be aggregated into a single connection that allows the vehicles 110-112 to maintain seamless network connectivity while traveling throughout the cells 105-107. In some embodiments, the multiple interfaces are aggregated to provide a higher total capacity for messages transmitted in the communication system 100. One or more of the interfaces can also be selected for conveying messages based on measured channel qualities on the different interfaces. However, conventional hybrid access technologies do not differentiate between different traffic priority levels or traffic classes that have different latency or reliability requirements, which leads to a number of drawbacks as discussed above. At least in part to address these drawbacks, the communication system 100 supports redundant transmission of mission-critical messages via one or more of the base stations 101-103 using multipath or hybrid access techniques.

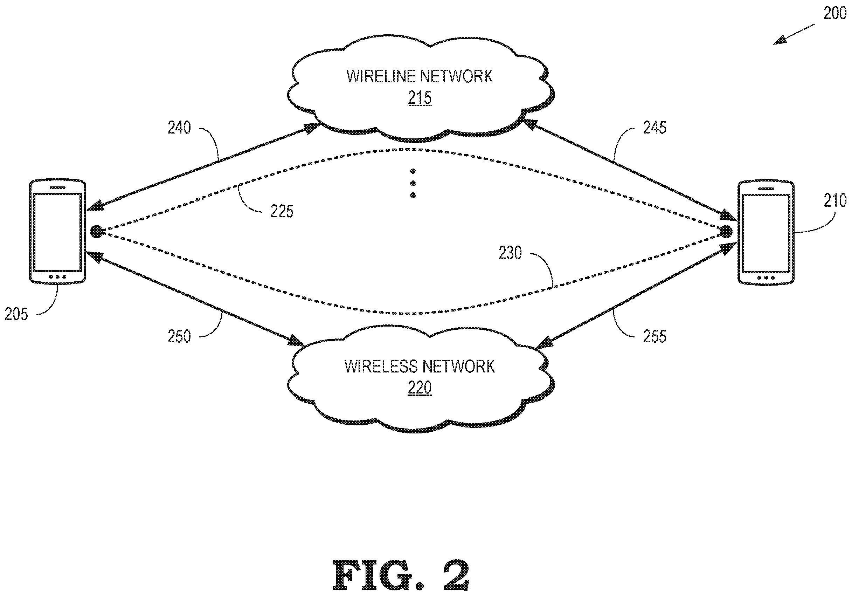

FIG. 2 is a diagram of a communication system 200 that supports hybrid access over a plurality of communication links according to some embodiments. The communication system 200 includes user equipment 205, 210 that are configured to exchange messages over various networks. The user equipment 205, 210 represent some embodiments of the vehicles 110-112 shown in FIG. 1. Although user equipment 205, 210 are shown in FIG. 2, similar principles are used to convey messages over multiple paths between other network entities such as base stations, gateways, servers, customer premises equipment (CPE), modems, vehicles, IoT devices, and the like. Thus, multipath communication in accordance with the techniques disclosed herein can also be performed between the user equipment 205, 210 and a network entity or between the network entities. Furthermore, in some embodiments, one or more direct paths that bypass the wireline network 215 and the wireless network 220 are formed between the user equipment 205, 210 using machine-to-machine protocols, device-to-device protocols, vehicle-to-vehicle protocols, and the like. Although FIG. 2 illustrates point-to-point communication, the hybrid access techniques disclosed herein can also be implemented in communication systems that implement point-to-multipoint communication such as broadcast or multicast.

The communication system 200 supports one or more wireline networks 215 and one or more wireless networks 220. A single wireline network 215 and a single wireless network 220 are shown in FIG. 2 in the interest of clarity. However, some embodiments of the communication system 200 include more than one wireline network 215 or more than one wireless network 220, multiple wireline networks 215 and no wireless networks, or multiple wireless networks 220 and no wireline networks 215. The wireline network 215 operates according to an access technology such as digital subscriber line (DSL) connectivity, data over cable service interface specification (DOCSIS), and the like. The wireless network 220 operates according to one or more other access technologies defined by standards such as Long Term Evolution (LTE) standards defined by the Third Generation Partnership Project (3GPP) to support communication in licensed or unlicensed frequency bands, Wi-Fi standards defined by the IEEE to support communication in unlicensed frequency bands in a wireless local area network (WLAN), satellite links, and the like. As used herein, the term "access technology" refers to a set of standards and corresponding physical devices or connections that are used to support communication between entities in the communication system 200. One access technology is different than another access technology if the two access technologies do not require each other to support communication. For example, the access technologies used for the wireline network 215 are different than the access technologies used for the wireless network 220. For another example, the DSL access technology is different than the DOCSIS access technology and the LTE access technology is different than the Wi-Fi access technology.

The user equipment 205, 210 exchange packets by transmitting the packets over multiple paths 225, 230 that traverse the wireline network 215 and the wireless network 220, respectively. The path 225 is formed using a communication link 240 between the user equipment 205 and the wireline network 215 and the communication link 245 between the wireline network 215 and the user equipment 210. The path 230 is formed using a communication link 250 between the user equipment 205 and the wireless network 220 and a communication link 255 between the wireless network 220 and the user equipment 210. However, in some embodiments, the user equipment 205, 210 can exchange packets over multiple paths that traverse the wireline network 215, multiple paths that traverse the wireless network 220, direct links that bypass the networks, or any combination thereof. Furthermore, in some embodiments, the individual paths 225, 230 are formed of a combination of communication links through wireless and wireline networks.

The user equipment 205, 210 use hybrid access techniques to combine or aggregate the paths 225, 230 into a single multipath connection between the user equipment 205, 210. Hybrid access can be performed in different layers of the network stack including the Internet protocol (IP) layer, the network layer, and the like. Hybrid access techniques are implemented by performing hybrid access on the transport layer or a higher layer of the network stack such as the application layer. Some embodiments of hybrid access techniques are implemented in a network-agnostic manner.

Some embodiments of the user equipment 205, 210 implement multipath communication at the application layer according to the MPQUIC protocols, which utilize the cryptographic and transport handshakes defined by the QUIC protocol for establishing secure connections with a relatively low latency. The QUIC protocol also supports congestion control, multiplexing, authentication and encryption of headers and payloads, stream and connection flow control, forward error correction, and connection migration. The MPQUIC protocol supports pooling of resources of the paths 225, 230 established according to the QUIC protocol, selection of one of the paths 225, 230 based on quality, and increased resilience of the connection between the user equipment 205, 210. A packet scheduler (not shown in FIG. 2) is used to schedule packets for transmission over one or more of the paths 225, 230. As discussed herein, the packet scheduler includes a packetization module that selectively duplicates messages in a subset of streams and packets that are scheduled for transmission over the paths 225, 230. Some embodiments of the packet scheduler include a congestion controller that partitions congestion window buffers into separate buffers for different streams, as discussed herein.

Some embodiments of the user equipment 205, 210 implement multipath communication at the transport layer according to MPTCP. An MPTCP connection includes multiple TCP connections, or subflows, that are used to carry information over the wireline network 215, the wireless network 220, or other networks that are available to provide connections between the user equipment 205, 210. The subflows in the MPTCP connection correspond to the paths 225, 230. In the illustrated embodiment, the MPTCP connection includes a first subflow 225 that conveys packets via the wireline network 215 using a first TCP session and a second subflow 230 that conveys packets via the wireless network 220 using a second TCP session. Since the TCP is a stateful protocol, the TCP sessions for the subflows 225, 230 are negotiated by the user equipment 205, 210 using a handshake protocol to define a state of the session prior to transporting the packets. The user equipment 205, 210 are able to perform traffic steering of uplink and downlink packets that are conveyed over one or more of the subflows 225, 230. For example, the user equipment 205 is able to aggregate the subflows 225, 230 into a single flow to increase bandwidth for downlink packets, designate the subflow 230 as a backup to provide resiliency in case of a failure of the subflow 225, or offload traffic from the subflow 225 to the subflow 230 for load-balancing purposes.

Conventional implementations of MPQUIC and MPTCP do not differentiate between traffic classes that have different latency or reliability requirements. The conventional implementations therefore suffer from unnecessary duplication of non-critical data and a corresponding waste of resources and increased latency, reduced transfer speed, lower reliability for mission-critical messages, delayed packet transmission, and the like. The user equipment 205, 210 are therefore configured to select messages for redundant transmission over the paths 225, 230 based on requirements for transmitting or receiving the messages and based on capacities of the paths 225, 230. Examples of the requirements include reliability or robustness, priorities, service delay constraints, and the like. In some embodiments, a packetization module receives a plurality of streams and a corresponding plurality of requirements. Messages in one of the streams are transmitted redundantly by duplicating or replicating the messages in packets that are scheduled for transmission over different paths. The paths that are used to transmit the duplicated or replicated messages are a selected subset of a set of available paths in some embodiments.

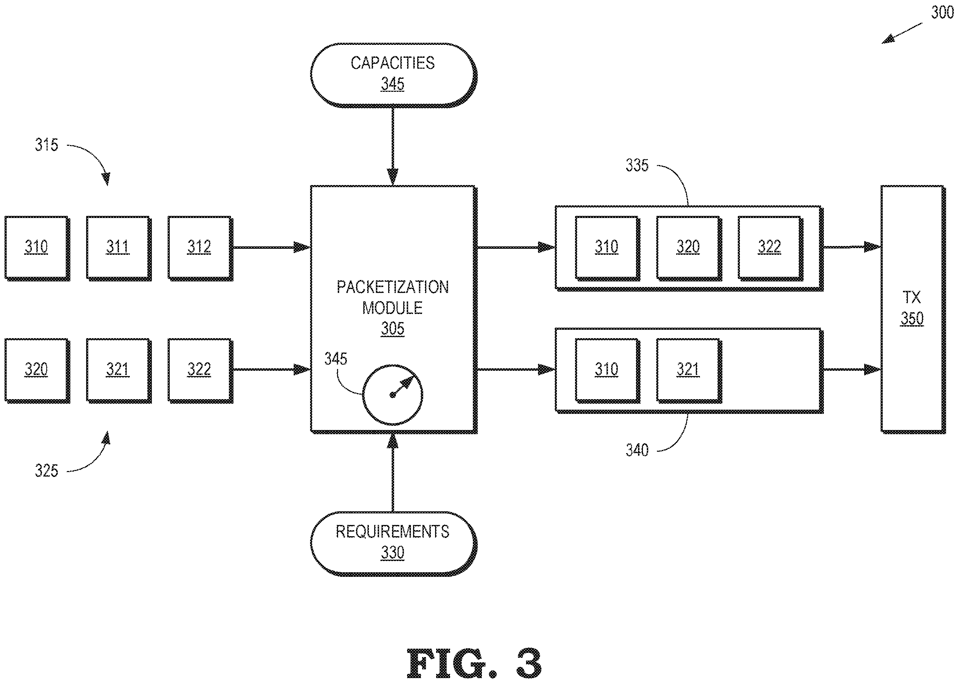

FIG. 3 is a block diagram of a packet scheduler 300 that is configured to generate packets including redundant messages according to some embodiments. The packet scheduler 300 is implemented in some embodiments of the communication system 100 shown in FIG. 1 and the communication system 200 shown in FIG. 2.

The packet scheduler 300 includes a packetization module 305 that receives messages 310, 311, 312 (collectively referred to herein as "the messages 310-312") in a stream 315 and messages 320, 321, 322 (collectively referred to herein as "the messages 320-322") in a stream 325. Although two streams 315, 325 are shown in FIG. 3, some embodiments of the packetization module 305 receive more than two streams including messages that are to be added to packets for transmission. The packetization module 305 also receives information indicating requirements 330 associated with the streams 315, 325. The requirements 330 are defined per-stream so that the requirements 330 include a set of requirements for the stream 315, a set of requirements for the stream 325, and (if necessary) additional sets of requirements for any additional streams received by the packetization module 305. The requirements 330 include one or more of an indication of a degree of reliability required for the stream, an indication of a degree of robustness required for the stream, a priority of the stream, a service delay constraint that applies to the stream, and the like. For example, the requirements 330 for the stream 315 indicate that the stream 315 is required to be transmitted with a high degree of reliability and under a strong time constraint. The stream 315 is therefore referred to as a time-critical stream. For another example, the requirements 330 for the stream 325 indicate that the stream 325 is not required to be transmitted with a high degree of reliability and is not sensitive to stringent time constraints. The stream 325 is therefore referred to as a non-time-critical stream. Some embodiments of the streams 315, 325 are distinguished based on other characteristics or requirements for the streams. For example, the streams 315, 325 can be distinguished based on different quality-of-service (QOS) requirements, different requirements specified by a 5G quality indicator, requirements related to suspicion parameters, and the like.

The packetization module 305 generates packets 335, 340 for transmission over corresponding paths, such as the paths 225, 230 shown in FIG. 2. The packetization module 305 also accesses information indicating capacities 345 of the paths. The capacities 345 is received prior to receiving data in the streams 315, 325 or concurrently with receiving the data in the streams 315, 325. The capacities 345 indicate one or more of bandwidths available for transmission over the paths, reliability of the paths to indicate which paths are preferentially (or always) selected for multipath/redundant transmission, and the like. In some embodiments, the capacities 345 are indicated indirectly, *e.g.* via monitoring the performance of the paths over time or monitoring congestion windows associated with the paths. However, some priorities are known in advance and are used to configure the scheduler. For example, a service level agreement can be used to establish priorities for one or more of the paths. Some embodiments of the packetization module 305 select the paths 225, 230 from a set of available paths that includes other paths in addition to the paths 225, 230. For example, the packetization module 305 can choose a subset of the available paths based on the capacities 345 of the set of available paths such that the selected subset of the available paths provides sufficient capacity to satisfy the requirements 330 for transmission of the streams 315, 325.

The packetization module 305 populates the packets 335, 340 based on the requirements 330 and the capacities 345. In the illustrated embodiment, the requirements 330 indicate that the stream 315 is a time-critical stream. The packetization module 305 therefore duplicates the messages 310-312 so that copies of the messages 310-312 are transmitted over both paths. For example, the message 310 is duplicated in the packets 335, 340. The requirements 330 indicate that the stream 325 is a non-time-critical stream. The messages 320-322 are therefore not duplicated or replicated and are only transmitted over one of the paths. For example, the messages 320, 322 are added to the packet 335 and the message 321 is added to the packet 340. In the illustrated embodiment, the packet 340 has additional capacity (as indicated by the capacities 345) that is available to be populated by additional messages from the stream 325. The packets 335, 340 are then provided to a transmitter 350 for transmission over the paths.

Some embodiments of the packetization module 305 include a timer 355 that is initiated in response to receiving a message in the time-critical stream 315. For example, the requirements 330 can indicate a maximum latency requirement for delivery of the messages 310-312. The timer 355 is therefore set to expire after a time interval that is determined based on the latency requirement. Observations of the system are used to determine typical end-to-end transmission and processing time for the packets 335, 340, which are then used to predict when the messages 310-312 should be transmitted in order to be received on time. For example, if a latency requirement for the messages 310-312 is 100 ms and the transmission time is known with 99.999% probability to be less than 30 ms, then the messages 310-312 should be transmitted within 70 ms of reception at the packetization module 305. Although a single timer 355 is shown in FIG. 3, some embodiments of the packetization module 305 implement multiple timers for multiple time-critical streams.

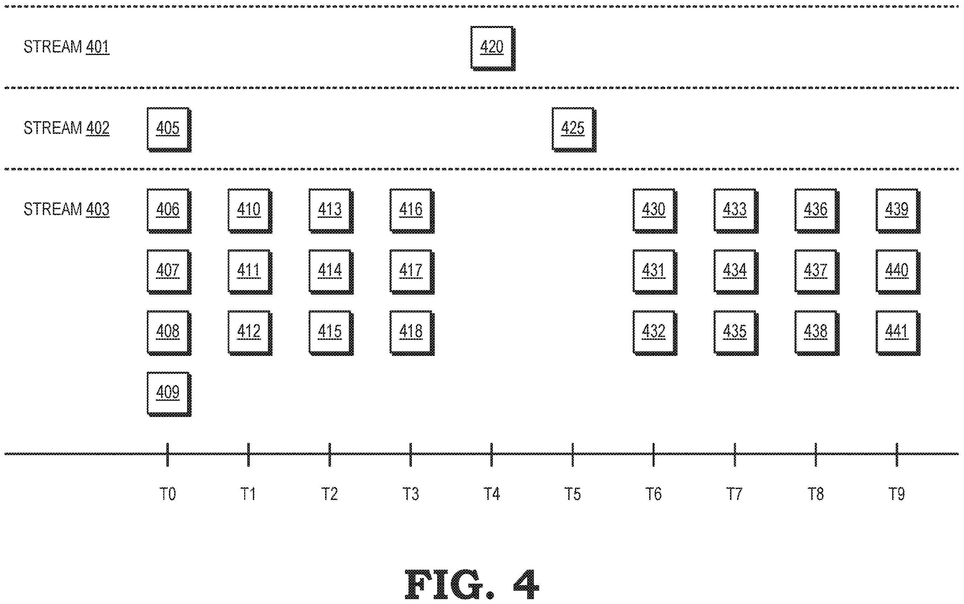

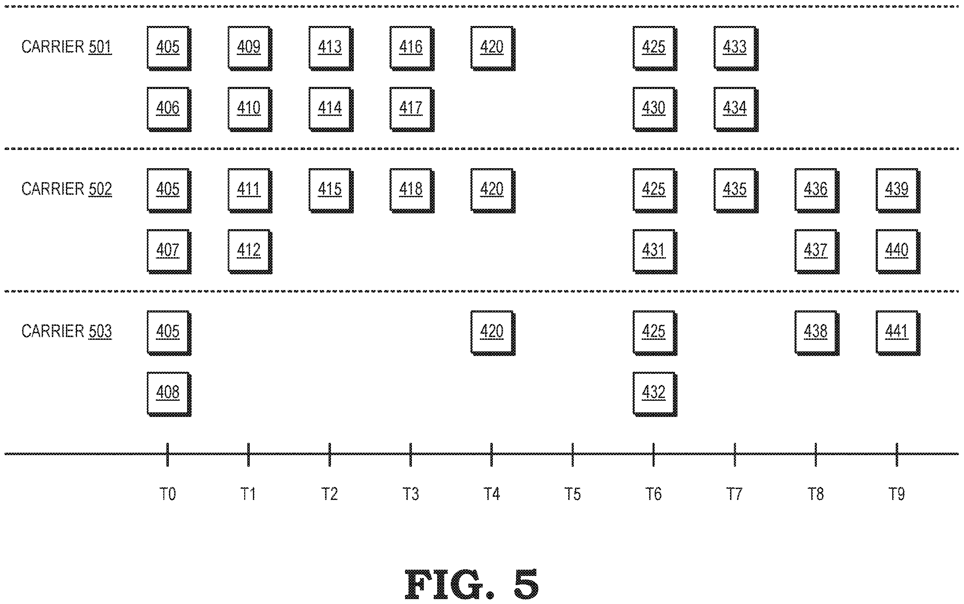

Operation of some embodiments of a packetization module such as the packetization module 305 shown in FIG. 3 are disclosed in FIGs. 4 and 5. FIG. 4 is a block diagram of messages in a plurality of streams 401, 402, 403 according to some embodiments. The messages in the plurality of streams 401-403 are received at the packetization module. Although three streams 401-403 are shown in FIG. 4, more or fewer streams are received by some embodiments of the packetization module. FIG. 5 is a block diagram of packets that are generated by the packetization module for transmission over carriers 501, 502, 503 corresponding to multiple paths through a network according to some embodiments. Although three carriers 501-503 are shown in FIG. 5, more or fewer carriers are used to support multipath communication in some embodiments of the packetization module. Time increases from left to right in FIGs. 4 and 5 and the labeled events (T0, T1, ...) in FIGs. 4 and 5 refer to the same events in both figures.

In the illustrated embodiment, the stream 401 is associated with a set of requirements that indicates that the stream is time-critical and requires robust/reliable transmission. Messages in the stream 401 are therefore duplicated or replicated in packets transmitted over the carriers 501-503 to provide the required robustness and reliability. Messages in the stream 401 are also transmitted substantially immediately to meet the time-critical requirement. The stream 402 is associated with a set of requirements that indicates that the stream 402 is non-time-critical, but the stream requires robust and reliable transmission. Messages in the stream 402 can therefore be delayed but these messages should be duplicated or replicated for transmission over multiple carriers 501-503. The stream 403 is associated with a set of requirements that indicates that the stream 403 is non-time-critical and only requires best effort transmission. Messages in the stream 403 are therefore scheduled based on available capacity and are not duplicated or replicated in packets for transmission over multiple carriers 501-503.

In the illustrated embodiment, the carrier 501 is owned or operated by a first operator. The carriers 502, 503 are owned or operated by a second operator. The carriers 501-503 have capacities that correspond to transmission of packets including two messages from the streams 401-403 per time interval. However, some embodiments of the carriers 501-503 have different capacities and can transmit packets including different numbers of messages per time interval.

At T=T0, the packetization module receives a robust, non-time-critical message 405 in the stream 402 and four best effort, non-time-critical messages 406, 407, 408, 409 in the stream 403. The message 405 is replicated for transmission over the carriers 501-503 to provide robustness. The remaining capacity of the carriers 501-503 is allocated to the messages 406, 407, 408. The message 409 is buffered until the next time interval, which does not cause any problems because the message 409 is a best effort, non-time-critical message.

At T=T1, the packetization module receives three best effort, non-time-critical messages 410, 411, 412 in the stream 403. The previously received message 409 and the messages 410-412 are allocated to packets for transmission over the carriers 501, 502. Thus, the capacity of the carriers 501, 502 is fully utilized and it is not necessary to use the carrier 503.

At T=T2, the packetization module receives three best effort, non-time-critical messages 413, 414, 415 in the stream 403. The messages 413-415 are allocated to packets for transmission over the carriers 501, 502. Thus, the capacity of the carrier 501 is fully utilized, the capacity of the carrier 502 is partially utilized, and it is not necessary to use the carrier 503.

At T=T3, the packetization module receives three best effort, non-time-critical messages 416, 417, 418 in the stream 403. The messages 416-418 are allocated to packets for transmission over the carriers 501, 502. Thus, the capacity of the carrier 501 is fully utilized, the capacity of the carrier 502 is partially utilized, and it is not necessary to use the carrier 503.

At T=T4, the packetization module receives a time-critical message 420 that requires robust and reliable communication. The packetization module therefore replicates the message 420 in packets for transmission over the carriers 501-503. The packets are scheduled for immediate transmission in order to meet the time-critical requirement. No non-time-critical or best effort packets are available to fill the available capacity of the carriers 501-503, but the time-critical requirement means that the packets must be transmitted in the current time interval even though they are not full.

At T=T5, the packetization module receives a non-time-critical message 425 that requires robust and reliable communication. The packetization module therefore replicates the message 425 in packets for transmission over the carriers 501-503. However, the message 425 is non-time-critical and so transmission of the message is delayed until additional messages are available to fill the available capacity of the carriers 501-503. Thus, no packets are transmitted on the carriers 501-503 in the time interval T5.

At T=T6, the packetization module receives three best effort, non-time-critical messages 430, 431, 432 in the stream 403. The messages 430-432 are distributed based on the available capacity in the carriers 501-503. For example, the message 430 is added to the packet including a copy of the message 425 for transmission over the carrier 501, the message 431 is added to the packet including a copy of the message 425 for transmission over the carrier 502, and the message 432 is added to the packet including a copy of the message 425 for transmission over the carrier 503.

At T=T7, the packetization module receives three best effort, non-time-critical messages 433, 434, 435 in the stream 403. The messages 433-435 are allocated to packets for transmission over the carriers 501, 502. Thus, the capacity of the carrier 501 is fully utilized, the capacity of the carrier 502 is partially utilized, and it is not necessary to use the carrier 503.

At T=T8, the packetization module receives three best effort, non-time-critical messages 436, 437, 438 in the stream 403. The messages 436-438 are allocated to packets for transmission over the carriers 502, 503. Thus, the capacity of the carrier 501 is not utilized, the capacity of the carrier 502 is fully utilized, and the capacity of the carrier 503 is partially utilized. Distributing the messages in packets for transmission over the carriers 502, 503, instead of the carriers 501, 502 allows the system to perform load-balancing over the carriers 501-503.

At T=T9, the packetization module receives three best effort, non-time-critical messages 439, 440, 441 in the stream 403. The messages 439-441 are allocated to packets for transmission over the carriers 502, 503. Thus, the capacity of the carrier 501 is not utilized, the capacity of the carrier 502 is fully utilized, and the capacity of the carrier 503 is partially utilized. Distributing the messages in packets for transmission over the carriers 502, 503, instead of the carriers 501, 502 allows the system to perform load-balancing over the carriers 501-503.

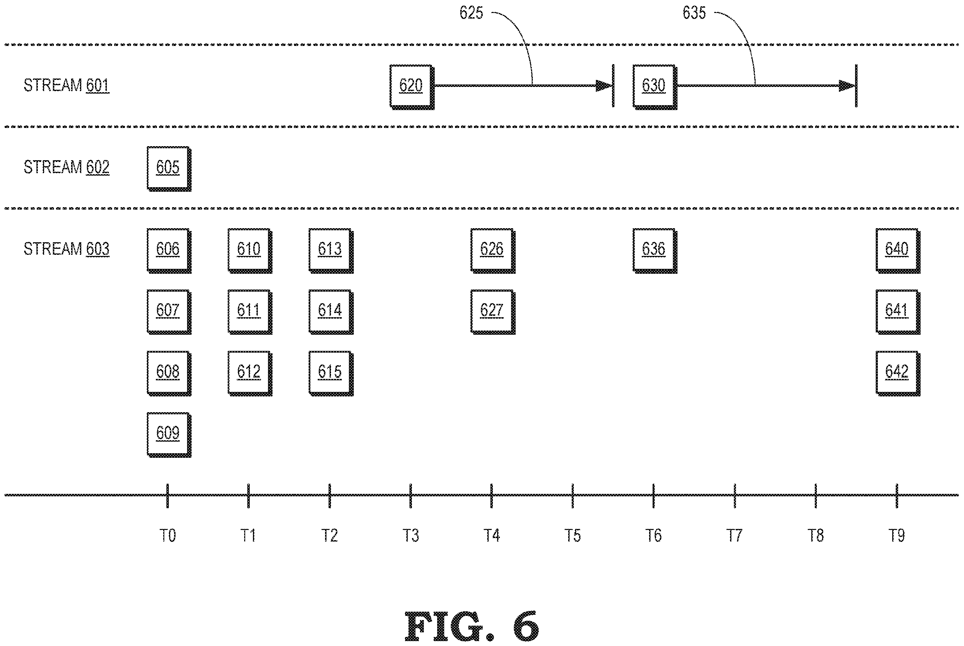

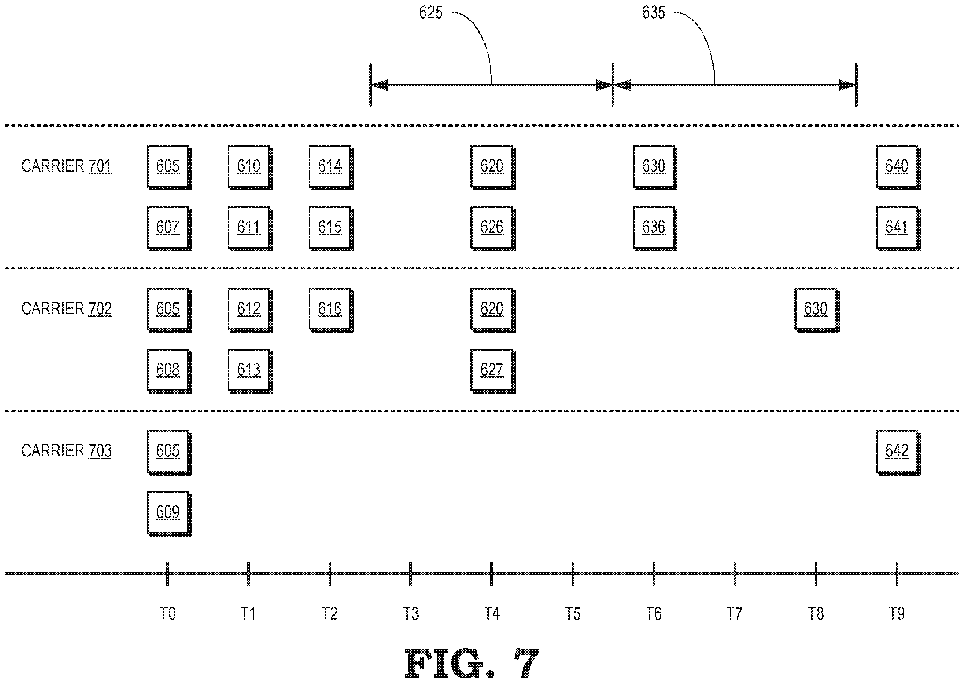

Operation of some embodiments of a packetization module such as the packetization module 305 shown in FIG. 3 are disclosed in FIGs. 6 and 7. FIG. 6 is a block diagram of messages in a plurality of streams 601, 602, 603 according to some embodiments. The messages in the plurality of streams 601-603 are received at the packetization module and have time criticality and robustness/reliability requirements corresponding to the streams 401-403 shown in FIG. 4. FIG. 7 is a block diagram of packets that are generated by the packetization module for transmission over carriers 701, 702, 703 corresponding to multiple paths through a network according to some embodiments. The operators and capacities of the carriers 701-703 correspond to the operators and capacities of the carriers 501-503 shown in FIG. 5. Time increases from left to right in FIGs. 6 and 7 and the labeled events (T0, T1, ...) in FIGs. 6 and 7 refer to the same events in both figures.

As discussed above, the requirements of the streams 601-603 and the capacities of the carriers 701-703 correspond to the requirements of the streams 401-403 and the carriers 501-503 shown in FIG. 5. The packetization module therefore distributes the messages 605, 606, 607, 608, 609, 610, 611, 612, 613, 614, 615 received in the streams 601-603 at the time intervals T0-T2 among packets for transmission over the carriers 701-703 in the same manner as the corresponding messages in FIGs. 4 and 5. The embodiments disclosed in FIGs. 6 and 7 differ from the embodiments disclosed in FIGs. 4 and 5 because the time-critical, robust/reliable message is received in stream 601 are associated with a further requirement that the messages be transmitted within corresponding time intervals.

At T=T3, the packetization module receives a time-critical message 620 that requires robust and reliable communication. The message 620 is associated with a requirement that the messages 620 be transmitted within the time interval 625. In the illustrated embodiment, the robustness requirement for the message 620 requires that the message 620 be duplicated for transmission on two of the carriers 701-703. No other messages are available for transmission during the time interval T3. However, the time interval 625 does not expire until the subsequent time interval T5 so the packetization module is not required to transmit the message 620 to satisfy the time criticality requirement specified by the time interval 625. No packets are transmitted over the carriers 701-703 during the time interval T3.

At T=T4, the packetization module receives two best effort, non-time-critical messages 626, 627 on the stream 603. The messages 626, 627 are added to the packets including the duplicated message 620. Adding the messages 626, 627 fills the available capacity of the carriers 701, 702. The packets are therefore schedule for transmission over the carriers 701, 702 in response to the packets reaching the available capacity.

At T=T5, the packetization module does not receive any messages on any of the streams 601-603. There are no buffered messages remaining. No packets are therefore transmitted over the carriers 701-703 during the time interval T5.

At T=T6, the packetization module receives a time-critical message 630 that requires robust and reliable communication. The message 630 is associated with a requirement that the message 630 be transmitted within the time interval 635. In the illustrated embodiment, the robustness requirement for the message 630 requires that the message 630 be duplicated for transmission on two of the carriers 701-703. The packetization module also receives a best effort, non-time-critical message 636 on the stream 603. The packetization module combines the message 630 and the message 636 into a packet that fills the capacity of the carrier 701. The packet is therefore scheduled for transmission over the carriers 701 in the time interval T6. The time interval 625 does not expire until the subsequent time interval T8 so the packetization module is not required to transmit the other copy of the message 620 to satisfy the time criticality requirement specified by the time interval 625.

At T=T7, the packetization module does not receive any messages in the streams 601-603. The remaining copy of the message 630 is not sufficient to fill the capacities of any of the carriers 701-703. However, the packetization module is not required to transmit the remaining copy of the message 630 because the time interval 625 has not yet expired. No packets are transmitted over the carriers 701-703 in the time interval T7.

At T=T8, the packetization module does not receive any messages in the streams 601-603. The remaining copy of the message 630 is not sufficient to fill the capacities of any of the carriers 701-703. However, the packetization module is required to transmit the remaining copy of the message 630 because the time interval 625 expires during the time interval T8. The packet including the message 630 is therefore scheduled for transmission on the carrier 702 in response to expiration of the time interval 625 even though this only partially utilizes the capacity of the carrier 702.

At T=T9, the packetization module receives three best effort, non-time-critical messages 640, 641, 642 in the stream 603. The messages 640-642 are allocated to packets for transmission over the carriers 701, 703. Thus, the capacity of the carrier 701 is fully utilized, the capacity of the carrier 702 is not utilized, and the capacity of the carrier 703 is partially utilized. Distributing the messages in packets for transmission over the carriers 701, 703, instead of the carriers 701, 702 allows the system to perform load-balancing over the carriers 701-703.

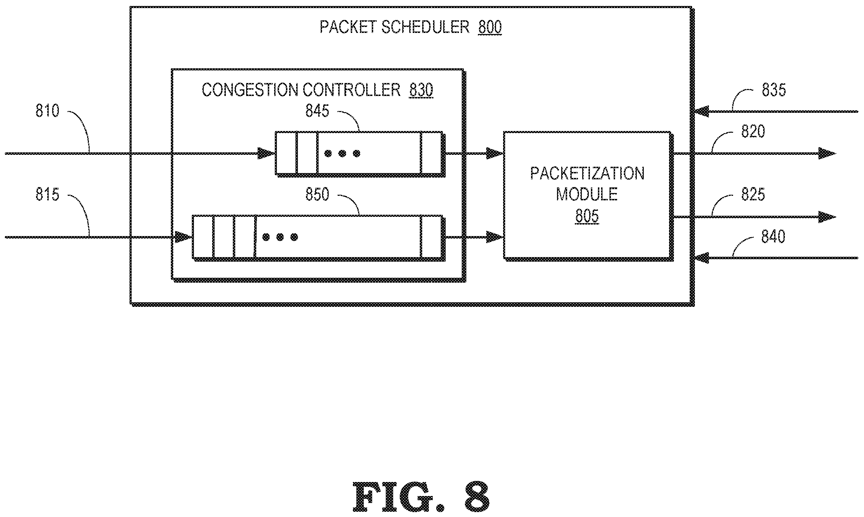

FIG. 8 is a block diagram of a packet scheduler 800 that performs congestion control according to some embodiments. The packet schedule 800 is implemented in some embodiments of the communication system 100 shown in FIG. 1, the communication system 200 shown in FIG. 2, and the packet scheduler 300 shown in FIG. 3. The packet scheduler 800 includes a packetization module 805 that corresponds to some embodiments of the packetization module 305 shown in FIG. 3.

The packet scheduler 800 receives multiple streams 810, 815 of messages that are to be added to packets for transmission over multiple paths 820, 825, *e.g.,* via different networks. The requirements for the stream 810 indicate that the stream 810 is a critical stream such as a time-critical stream that requires robust or reliable transmission. The requirements for the stream 815 indicate that the stream 815 is not a critical stream, *e.g.,* the stream 815 is a non-time-critical stream that does not require robust or reliable transmission. Although two streams 810, 815 and two paths 820, 825 are shown in FIG. 8, some embodiments of the packet scheduler 800 are able to receive more than two streams and use more than two paths for multipath communication.

A congestion controller 830 is configured to limit the number of messages or packets that are transmitted over the paths 820, 825 based on a congestion window that determines a number of in-flight packets that are transmitted without receiving a subsequent acknowledgment from the receiver. The congestion controller 830 determines a size of the congestion window based on feedback from a receiver. In the illustrated embodiment, the congestion controller 830 receives acknowledgment messages 835 in response to transmitting packets over the path 820 and acknowledgment messages 840 in response to transmitting packets over the path 825. However, other types of feedback are used in other embodiments, e.g., one set of acknowledgment messages can be used to acknowledge all the packets received over either of the paths 820, 825.

Sharing a common congestion window between the streams 810, 815 can result in the stream 810 becoming unable to access congestion buffers. For example, if the stream 815 is a high rate stream that transmit messages at a much higher rate than the stream 810, the messages in the stream 815 can exhaust the congestion window and fill the associated buffers. The messages in the stream 810 may therefore be delayed or dropped. To address this issue, the congestion controller 830 supports per-path and per-stream congestion control.

Some embodiments of the congestion controller 830 partition the congestion window to provide separate congestion windows for the streams 810, 815. In the illustrated embodiment, the congestion controller 830 partitions the congestion window by providing separate congestion buffers 845, 850 for the streams 810, 815, respectively. The stream 810 is therefore able to add messages to the congestion buffer 845 regardless of the congestion status of the stream 815, *e.g.,* if the congestion buffer 850 is filled due to messages being added from a high data rate stream 815. Sizes of the congestion windows and the corresponding congestion buffers 845, 850 are adjusted based on the feedback 835, 840. In some embodiments, the sizes of the congestion windows and the corresponding congestion buffers 845, 850 are adjusted independently so that the relative sizes of the congestion windows for the streams 810, 815 is not necessarily constant over time.

In other embodiments, the congestion controller 830 implements a single congestion window per path, *e.g.,* the congestion buffers 845, 850 are associated with the paths 820, 825 instead of the streams 810, 815. These embodiments of the congestion controller 830 implement per-stream, per-path congestion control by creating virtually different congestion windows for the different streams 810, 815. The virtual congestion windows are used to provide transmission priority to higher priority or critical streams such as the stream 810. For example, the congestion controller 830 can ignore an external congestion window limit and provide data from the stream 810 even if the congestion window for the path 820 is congested. Although this violates the external assumption of the meaning of "congestion window" and temporarily violates the requirements of the total congestion window, the overshoot created by the extra data from the stream 810 automatically converges back to the level indicated by the congestion window as the low-priority data in the stream 815 backs off to respect the total congestion window. The congestion controller 830 is therefore able to operate very close to a maximum capacity (goodput) while still retaining the ability to put priority data forward. For another example, the congestion controller 830 respects the external congestion window limit and internally implements a conservative back-off in order to provide room for priority data, *e.g.,* the stream 810, while respecting the external congestion windows for the paths 820, 825. This approach has a higher cost in overall goodput but does not violate the congestion window.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

Aspects of various embodiments are specified in the claims. Some of those and other aspects of various embodiments are specified in the following numbered clauses:
1. An apparatus comprising:
   a packetization module configured to receive messages in a plurality of streams, requirements corresponding to the plurality of streams and access information indicating capacities of a plurality of paths between a first endpoint and a second endpoint; and
   a transmitter to redundantly transmit messages from a subset of the plurality of streams over the plurality of paths, wherein the packetization module selects the subset based on the requirements and the capacities.
2. The apparatus of clause 1, wherein the packetization module is configured to receive first messages in a first stream and second messages in a second stream, and wherein the packetization module selects the first stream to be in the subset based on requirements for the first stream.
3. The apparatus of clause 2, wherein the packetization module duplicates the first messages in packets scheduled for transmission over the plurality of paths.
4. The apparatus of clause 3, wherein the packetization module is configured to add a portion of the second messages to the packets including the duplicated first messages, and wherein the packetization module is configured to select the portion of the second messages based on the capacities of the plurality of paths.
5. The apparatus of clause 3, further comprising:
   a timer that is initiated in response to the packetization module receiving one of the first messages.
6. The apparatus of clause 5, wherein the packetization module is configured to add at least one second message to the packets including the duplicated first messages in response to receiving the at least one second message in the second stream.
7. The apparatus of clause 6, wherein the transmitter is configured to transmit the packets over the plurality of paths in response to the packets reaching the capacities of the plurality of paths.
8. The apparatus of clause 6, wherein the transmitter is configured to transmit the packets over the plurality of paths in response to expiration of the timer.
9. The apparatus of clause 1, wherein the requirements comprise at least one of an indication of reliability, an indication of robustness, a priority, and a service delay constraint.
10. The apparatus of clause 1, further comprising:
   a congestion controller; and
   a plurality of buffers with at least one congestion window for the plurality of streams, wherein the plurality of buffers is configured to store the messages in the plurality of streams, wherein the congestion controller is configured to modify the at least one congestion window based on acknowledgment feedback received in response to the transmitter transmitting packets including messages in the plurality of streams over the plurality of paths.
11. A method, comprising:
   selecting time-critical messages for redundant transmission from a first endpoint over a plurality of paths to a second endpoint based on capacities of the plurality of paths; and
   transmitting the time-critical messages over the plurality of paths in a plurality of packets that include redundant information representative of the time-critical messages and non-redundant information representative of non-time-critical messages.
12. The method of clause 11, further comprising:
   identifying the time-critical messages in a first stream based on requirements associated with the first stream; and
   identifying non-time-critical messages in a second stream based on requirements associated with the second stream.
13. The method of clause 11, further comprising:
   replicating the time-critical messages in the plurality of packets for transmission over the plurality of paths; and
   populating the plurality of packets with non-time-critical messages based on the capacities of the plurality of paths.
14. The method of clause 13, further comprising:
   initiating a timer in response to receiving one of the time-critical messages.
15. The method of clause 14, wherein transmitting the messages over the plurality of paths comprises transmitting the plurality of packets in response to at least one of expiration of the timer and the plurality of packets being populated to the capacities of the plurality of paths.

## Claims

1. A method comprising:
receiving, at a packetization module, messages in a plurality of streams;
accessing, at the packetization module, information indicating capacities of a plurality of paths between a first endpoint and a second endpoint; and
redundantly transmitting messages from a subset of the plurality of streams over the plurality of paths, wherein the subset is selected based on the capacities and requirements corresponding to the plurality of streams.

2. The method of claim 1, wherein receiving the messages comprises receiving first messages in a first stream and second messages in a second stream, and wherein the first stream is selected to be in the subset based on requirements for the first stream.

3. The method of claim 2, wherein redundantly transmitting the messages from the subset comprises duplicating the first messages in packets scheduled for transmission over the plurality of paths.

4. The method of claim 3, wherein redundantly transmitting the messages from the subset comprises adding a portion of the second messages to the packets including the duplicated first messages, and wherein the portion of the second messages is selected based on the capacities of the plurality of paths.

5. The method of claim 3, further comprising:
initiating a timer in response to receiving one of the first messages.

6. The method of claim 5, further comprising:
adding at least one second message to the packets including the duplicated first messages in response to receiving the at least one second message in the second stream.

7. The method of claim 6, further comprising:
transmitting the packets over the plurality of paths in response to the packets reaching the capacities of the plurality of paths.

8. The method of claim 6, further comprising:
transmitting the packets over the plurality of paths in response to expiration of the timer.

9. The method of claim 1, wherein receiving the requirements corresponding to the plurality of streams comprises receiving at least one of an indication of reliability, an indication of robustness, a priority, and a service delay constraint.

10. The method of claim 1, wherein receiving the messages in the plurality of streams comprises storing the messages in a corresponding plurality of buffers with at least one congestion window in a congestion controller, and wherein the at least one congestion window is modified based on acknowledgment feedback received in response to transmitting packets including messages in the plurality of streams over the plurality of paths.

11. An apparatus comprising:
a packetization module configured to receive messages in a plurality of streams, requirements corresponding to the plurality of streams and access information indicating capacities of a plurality of paths between a first endpoint and a second endpoint; and
a transmitter to redundantly transmit messages from a subset of the plurality of streams over the plurality of paths, wherein the packetization module selects the subset based on the requirements and the capacities.

12. The apparatus of claim 11, wherein the packetization module is configured to receive first messages in a first stream and second messages in a second stream, and wherein the packetization module selects the first stream to be in the subset based on requirements for the first stream.

13. The apparatus of claim 12, wherein the packetization module duplicates the first messages in packets scheduled for transmission over the plurality of paths.

14. The apparatus of claim 13, wherein the packetization module is configured to add a portion of the second messages to the packets including the duplicated first messages, and wherein the packetization module is configured to select the portion of the second messages based on the capacities of the plurality of paths.

15. The apparatus of claim 13, further comprising:
a timer that is initiated in response to the packetization module receiving one of the first messages.
